# EUROPEAN PATENT APPLICATION

(11) **EP 2 595 420 A1**
(43) Date of publication of application: **22.05.2013**
(21) Application number: 11306520.5
(22) Date of filing: 18.11.2011
(51) Int. Cl.: H04W 12/02, H04L 29/06, H04W 8/20

(54) **Method of sending a message to a secure element**

(71) Applicant: Gemalto SA, 92190 Meudon (FR)
(72) Inventor: Gattone, Alain, 13390 AURIOL (FR); Vila, Christophe, 13124 PEYPIN (FR); Amiel, Patrice, 13290 AIX-LES-MILLES (FR)

(57) **Abstract**

The invention is a method of sending a message from a server to a secure element having limited resources and connected to a host machine. The method comprises the steps of:
a) establishing a permanent and bidirectional secure channel between the server and the secure element,
b) sending the message from the server to the secure element through the permanent and bidirectional secure channel and via the host machine.

## Description

### (Field of the invention)

The present invention relates to the methods of sending a message to a secure element. It relates particularly to methods of sending messages from a server to a secure element acting as a client.

### (Prior art)

Secure elements are small devices comprising a memory, a microprocessor and an operating system for computing treatments. Such secure elements may comprise a plurality of memories of different types. They are called "secure" because they are able to control the access to the data they contain and to authorize or not the use of data by other machines. The secure elements may also provide computation services based on cryptographic components. In general, secure elements have limited computing resources and limited memory resources and they are intended to be connected to a host machine. Secure elements may be removable or fixed to a host machine. For example, smart cards are a kind of secure elements.

A secure element may contain applications, applicative data, file systems and secret data. The content of a secure element may be accessed by a remote server via a wireless channel or through a wired network, like Internet for instance. For example, secure elements which are intended to be used in Telecom domain or Machine-To-Machine (M2M) domain are able to manage an OTA (Over-The-Air) channel. These secure elements may also be accessed through the HyperText Transfer Protocol, usually called HTTP or HTTPS for the secure mode.

In a usual client/server scheme, the client initiates each new communication session. The server answers to the client request and cannot initiate a new communication session. Up to now, the communication channel which is established between a server and a secure element is a temporary channel which works according to the client/server scheme. A known solution is the polling mechanism where the secure element periodically sends a request to the server. In this case, the server must wait for the next periodic request before sending a message to a targeted secure element.

There is a need for allowing a server to initiate the sending of a message to a secure element.

### (Summary of the Invention)

An object of the invention is to solve the above mentioned technical problem.

The object of the present invention is a method of sending a message from a server to a secure element which has limited resources. The secure element is connected to a host machine. The method comprises the steps of:
a) establishing a permanent and bidirectional secure channel between the server and the secure element,
b) sending the message from the server to the secure element through the permanent and bidirectional secure channel and via the host machine.

Advantageously, the permanent and bidirectional secure channel may be is established over a single TCP socket. Advantageously, the permanent and bidirectional secure channel may comply with WebSocket as described in draft standard proposal "The WebSocket protocol - draft-ietf-hybi-thewebsocketprotocol-09".

Advantageously, the message may be a push message comprising a data having the format of a SMS payload as defined by ETSI 102 225 standard. The secure element may initiate the opening of a second channel in response to the receipt of the message and the secure element may send a request to the server through the second channel.

Alternatively, the message may be a push message comprising a data having the format of a SMS payload as defined by ETSI 102 225 standard and the secure element may send a request to the server through the permanent and bidirectional secure channel in response to the receipt of the message.

Alternatively, the secure element may be intended to comprise an entity and the message may be a push message comprising a command which targets the entity. The secure element may send a response to the command to the server through the permanent and bidirectional secure channel.

Alternatively, the message may be a broadcast message comprising a criterion. The secure element may check the criterion and send a request to the server in case of successful checking.

Another object of the invention is a secure element intended to receive a message from a server via a connected host machine. The secure element has limited resources. The secure element comprises starting means adapted to initiate the establishment of a permanent and bidirectional secure channel between the server and the secure element.

Advantageously, the permanent and bidirectional secure channel may be established over a single TCP socket and may comply with WebSocket requirements as described in draft standard proposal "The WebSocket protocol -draft-ietf-hybi-thewebsocketprotocol-09".

Advantageously, the message may be a push message comprising a data having the format of a SMS payload as defined by ETSI 102 225 standard. The secure element may comprise an opening means adapted to open a second channel in response to the receipt of the message. The secure element may comprise a requesting means adapted to send a request to the server through the second channel.

Alternatively, the message may be a push message comprising a data having the format of a SMS payload as defined by ETSI 102 225 standard. The secure element may comprise a caller means adapted to send a request to the server through the permanent and bidirectional secure channel in response to the receipt of the message.

Alternatively, the secure element may comprise an entity and the message may be a push message comprising a command targeting the entity. The secure element may comprise an answering means adapted to send a response to the command to the server through the permanent and bidirectional secure channel.

Alternatively, the message may be a broadcast message comprising a criterion. The secure element may comprise a checking means adapted to check the criterion and to send a request to the server in case of successful checking.

Another object of the invention is a system comprising a first server, a second server and a secure element. The secure element is according to the above-described invention. Second server comprises a generator means that is adapted to generate a command intended to be sent to the secure element. First server comprises a communication means adapted to send a message comprising the command to the secure element through a WebSocket channel as described in draft standard proposal "The WebSocket protocol -draft-ietf-hybi-thewebsocketprotocol-09".

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a secure element which communicates with a distant server via a host machine according to the invention;
- Figure 2 is an example of a system comprising two servers and a secure element according to an embodiment of the invention,
- Figure 3A depicts schematically an example of architecture of a secure element according to one embodiment of the invention and Figure 3B shows an example of message exchanges between a server and this secure element,
- Figure 4A depicts schematically an example of architecture of a secure element according to a second embodiment of the invention and Figure 4B shows an example of message exchanges between a server and this secure element,
- Figure 5A depicts schematically an example of architecture of a secure element according to a third embodiment of the invention and Figure 5B shows an example of message exchanges between a server and this secure element,
- Figure 6A depicts schematically an example of architecture of a secure element according to a fourth embodiment of the invention and Figure 6B shows an example of message exchanges between a server and this secure element.

### (Detailed description of the preferred embodiments)

The invention may apply to any types of secure elements intended to be accessed by a server. In the following examples, the secure element is a Universal Integrated Circuit Card (UICC) but it could be any other kind of secure element. For example, the secure element may be a Secure Digital (SD) ® token (like a microSD card) or an embedded Universal Integrated Circuit Card (eUICC) which is a non-removable UICC. Such a eUICC may be welded into a host device. In this specification, the secure element is connected to a host machine. In particular, the host machine may be a mobile phone, a tablet, a Personal Digital Assistant (PDA) or a telecom terminal. The secure element accesses a remote server through the host machine.

The present invention relies on the establishment of a bidirectional and permanent communication channel which is initiated by the secure element. Unlike the client/server model, a bidirectional communication channel allows each actor to initiate the sending of data. Thanks to a bidirectional channel, the server may initiate a communication exchange with the secure element at any time. Thus when a specific event occurs, the server may send a message to the secure element without waiting for a request from the secure element. A temporary channel is automatically closed after a preset duration or after an idle period. A channel is considered as being a permanent channel when the channel remains always connected even if there is no activity. In other words, a permanent channel remains alive even if there is no activity on this channel.

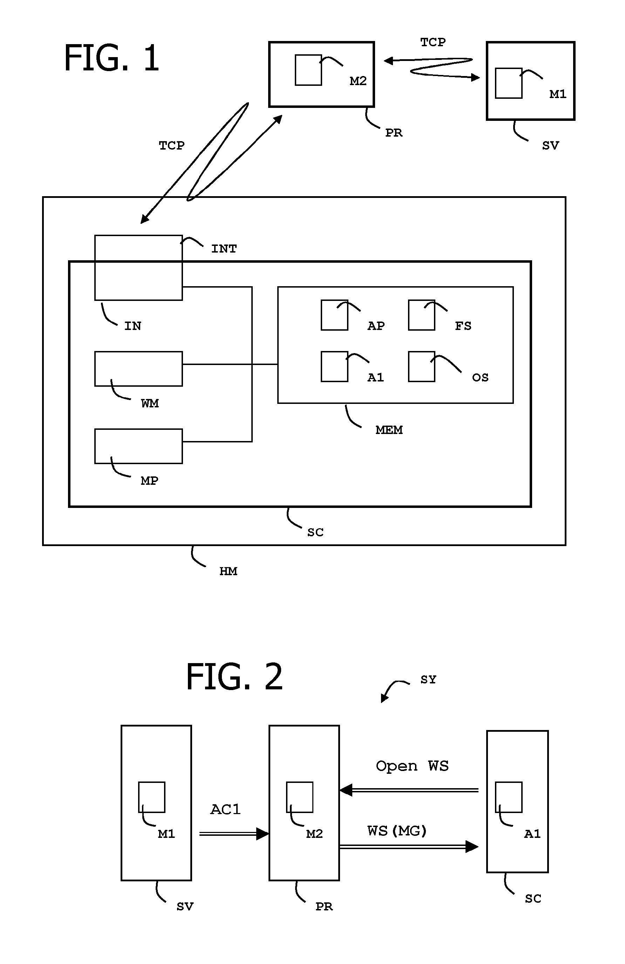

**Figure 1** shows the architecture of a secure element SC connected to a host machine HM and exchanging messages with a server PR according to one embodiment of the invention.

The secure element SC is a UICC and comprises a working memory WM of RAM type, a non volatile memory MEM, a microprocessor MP and a communication interface IN. The non volatile memory MEM comprises an operating system OS which may contain a Virtual Machine.

The non volatile memory MEM comprises a starting means A1. The non volatile memory MEM comprises two entities: a file system FS and an application AP.

The memory MEM may be implemented as any combinations of one, two or more memories. These memories may be any kind of non volatile memory (for example: NAND flash or EEPROM memory).

The UICC SC is intended to exchange messages with a telecom handset HM through the communication interface IN. The telecom handset HM is intended to communicate with the UICC with a dedicated communication interface INT. The telecom handset HM is intended to exchange messages with a distant server PR via the OTA mechanism. The server PR is able to communicate with another server SV by using a secured communication channel. The server PR is in front line for accessing the secure element SC. The secure element SC may exchange data with the distant server SV through the connected host machine HM and through the server PR.

The server PR comprises a communication means M2 which is able to exchange data with the secure element SC through a bidirectional and permanent communication channel WS. In a preferred embodiment, the bidirectional and permanent communication channel WS uses a single TCP socket. Advantageously, the channel WS is a WebSocket channel as described in draft standard proposal "The WebSocket protocol -
draft-ietf-hybi-thewebsocketprotocol-09".

The server SV comprises a generator means M1 adapted to generate a command which is intended to be sent to the secure element SC. The server SV may be an application server.

The starting means A1 is able to initiate the establishment of a permanent and bidirectional secure channel WS between the server PR and the secure element SC. In a preferred embodiment, the starting means A1 is capable of establishing a WebSocket channel over a single TCP socket.

Advantageously, the starting means A1 is automatically triggered when the secure element is reset or when a previous secure channel WS is broken.

**Figure 2** shows an example of a system comprising a server SV, a server PR and a secure element SC according to the invention.

The secure element SC of Figure 2 is similar to the secure element of Figure 1. The servers PR and SV of Figure 2 are similar to the servers of Figure 1. Although the host machine HM is not drawn on Figure 2, the message exchanges between the server PR and the secure element SC are assumed to be forwarded by an intermediate host machine.

In this example, the server SV is a remote machine able to manage OTA messages according to ETSI 102 225 and 3GPP 31.115 standard and able to manage HTTPS messages. The server PR is able to communicate with the server SV through a secure channel which may be based on HTTPS or any reliable channel.

Advantageously, the server SV may be connected to a plurality of servers similar to the server PR. Each server belonging to the plurality of servers may be able to access several secure elements according to the invention. Thanks to this architecture, a large number of secure elements deployed on the field may be securely accessed at any time. Thanks to this architecture, each server similar to the server PR may remain connected to a plurality of secure elements in a permanent manner.

The server SV is able to exchange data with the server PR by using a secure communication session based on wireless or wired channel. For instance, the communication between the two servers may be based on Transmission Control Protocol (TCP) or Java Message Service (JMS).

Alternatively, the server PR and the server SV may be merged in a single machine.

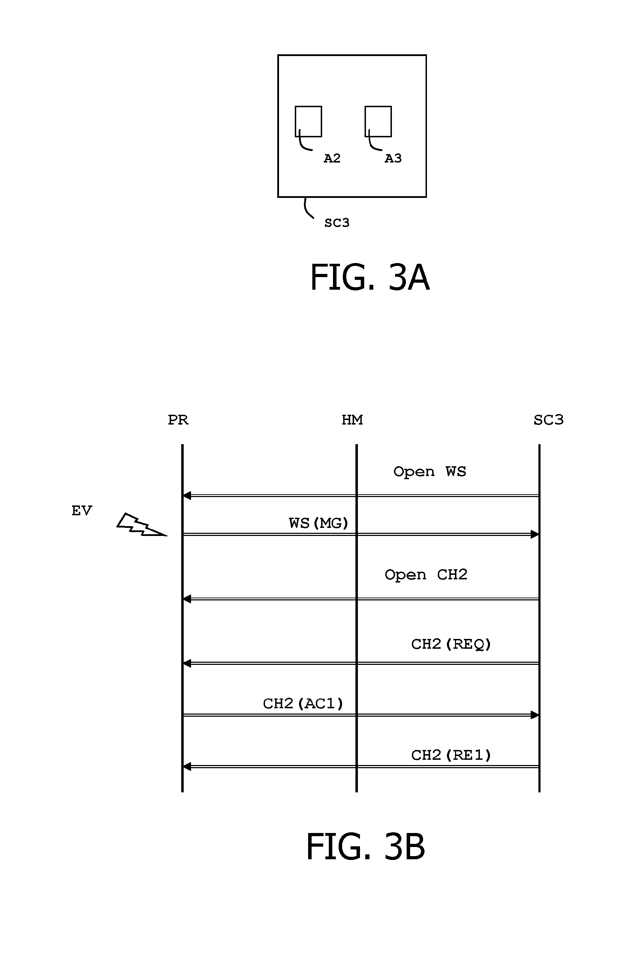

**Figure 3A** shows the architecture of a secure element SC3 according to one embodiment of the invention.

The architecture of the secure element SC3 is similar to architecture of the secure element SC of Figure 1. In addition, the secure element SC3 comprises an opening means A2 and a requesting means A3. Preferably, these two means are stored in the non volatile memory MEM.

The opening means A2 is able to open a channel CH2 in response to the receipt of a message received through the secure channel WS. The channel CH2 is established between the secure element SC and the server PR. In one embodiment, the channel CH2 is different from the permanent and bidirectional secure channel WS. For instance the channel CH2 may be a SCP81 channel as defined by GlobalPlatform ® v 2.2 standard - Amendment B "RAM over HTTP", using a new dedicated TCP connection.

The requesting means A3 is capable of sending a request REQ to the server PR through the channel CH2. In one embodiment, the requesting means A3 is automatically triggered at the end of the establishment of the channel CH2.

**Figure 3B** shows an example of message exchanges between a server PR and the secure element of Figure 3A wherein the secure element opens a second channel and runs with usual protocols.

At a first step, the secure element SC3 initiates the establishment of a permanent and bidirectional secure channel WS with the server PR. Advantageously, the secure channel WS may be a WebSocket channel. Advantageously, this channel establishment may be automatically triggered when the secure element SC3 receives a "Power on" event from the host machine HM. For instance, in response to the "Power on" event, the secure element may run a BIP open channel with the host machine HM and open the channel WS.

At a second step, the server PR sends a message MG to the secure element SC3 thanks to the secure channel WS. An event EV triggers the sending of the message MG. Advantageously, the message MG may be a push message. In response to a push message, the secure element SC3 is supposed to send a request to the server PR. At a third step, the secure element SC3 initiates the establishment of a second secure channel CH2 with the server PR. Advantageously, the second channel CH2 may be a SCP81 channel, using a new dedicated TCP connection.

At a fourth step, the secure element SC3 sends a request REQ to the server PR through the second channel CH2. For instance, the request may be a HTTP POST request according to RAM (Remote Application Management) over HTTP mechanism. At a fifth step, the server PR sends a command AC1 to the secure element SC3 thanks to the second channel CH2. For instance, the command AC1 may be an Application Protocol Data Unit (APDU) as defined by ISO 7816 standard. At a sixth step, the secure element sends a response RE1 to the server PR. The response RE1 corresponds to the result of the execution of the command AC1. The response RE1 is sent through said second channel CH2.

Advantageously, the message MG may contain data having the format of a SMS payload as defined by ETSI 102 225 standard. Such a SMS payload contains a TAR (Toolkit Application Reference) which is analyzed by the operating systems OS of the secure element SC3. Depending of the TAR value, a part of the SMS payload is then forwarded to the targeted entity. For instance, the secure element may comprise a Security domain as defined by GlobalPlatform version 2.2 standard and the targeted entity may be this Security domain. In another example, the entity is an application embedded in the secure element.

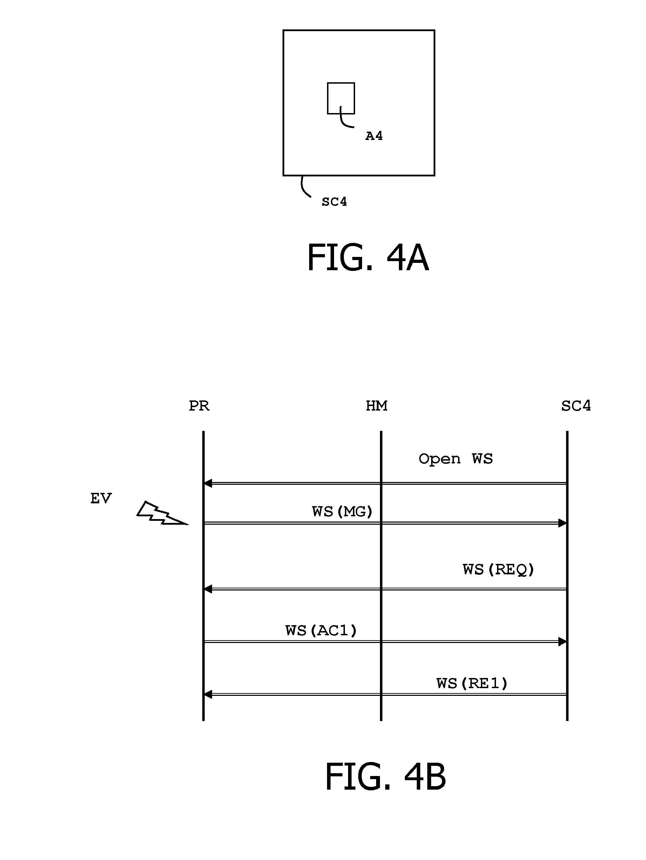

**Figure 4A** shows the architecture of a secure element SC4 according to one embodiment of the invention. The architecture of the secure element SC4 is similar to architecture of the secure element SC of Figure 1. In addition, the secure element SC4 comprises a caller means A4. Preferably, this caller means A4 is stored in the non volatile memory MEM.

**Figure 4B** shows an example of message exchanges between a server PR and a secure element SC4 according to an embodiment of the invention wherein the secure element reuses the permanent and bidirectional secure channel WS by using usual protocols. The secure element SC4 is described at Figure 4A.

The first step is similar to that described for Figure 3B. At a second step, the server PR sends a message MG to the secure element SC4 thanks to the secure channel WS. An event EV triggers the sending of the message MG. The message MG contains a command AC1. Advantageously, the message MG may contain an identifier of the server SV so that the secure element may build a response RE1 which targets the server SV. The server PR is assumed to be able to forward the response RE1 by taking into account the identifier of the targeted server. For instance, the message MG may contain the URI (Uniform Resource Identifier) of the server SV.

At a third step, the secure element SC4 sends a request REQ to the server PR through the permanent and bidirectional secure channel WS. For instance, the request may be a HTTP POST request according to RAM over HTTP mechanism. The request sending is managed thanks to a multiplexing scheme on the channel WS. At a fourth step, the server PR sends a command AC1 to the secure element SC4 thanks to the secure channel WS. For instance, the command AC1 may be an http command for SCWS (Smart Card Web Server) remote administration. At a fifth step, the secure element sends a response RE1 to the server PR. The response RE1 reflects the result of the execution of the command AC1. The response RE1 is sent through said secure channel WS.

Advantageously, the secure element may comprise a Security domain as defined by GlobalPlatform. After the receipt of the part of the message MG which targets the security domain, the security domain asks for the opening of a channel. In this case, the operating system OS of the secure element SC4 may simulate that a new channel is opened by sending a relevant acknowledgement to the security domain. Thus the security domain may works as usual.

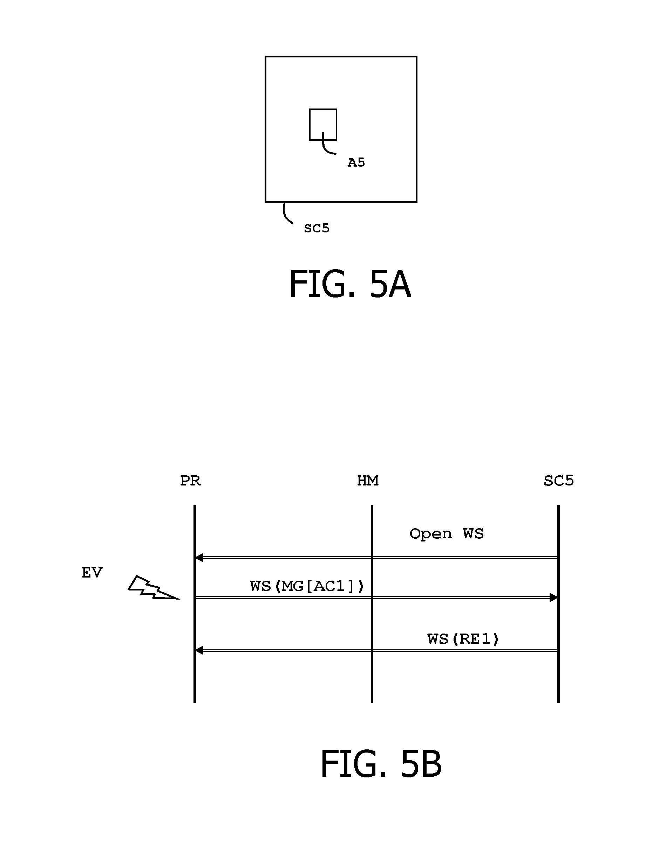

**Figure 5A** shows the architecture of a secure element SC5 according to one embodiment of the invention. The architecture of the secure element SC5 is similar to architecture of the secure element SC of Figure 1. In addition, the secure element SC5 comprises an answering means A5. Preferably, this answering means A5 is stored in the non volatile memory MEM.

**Figure 5B** shows an example of message exchanges between a server PR and a secure element SC5 of Figure 5A wherein the secure element reuses the permanent and bidirectional secure channel WS by using a new applicative protocol.

The first step is similar to that described for Figure 3B. At a second step, the server PR sends a message MG to the secure element SC5 thanks to the secure channel WS. An event EV triggers the sending of the message MG. The message MG contains a command AC1. For example, the command AC1 may be an APDU compliant with the following syntax CLA INS P1 P2 as defined by ISO7816 standard. For instance, the command AC1 may be an UpdateRecord command coded as <0x00DC010403010203> where the value "010203" is to be written into the record number #01 of the currently selected file of the file system FS.

At a third step, the secure element sends a response RE1 to the server PR through the secure channel WS. The response RE1 reflects the result of the execution of the command AC1.

Advantageously, the secure element SC5 may comprise a Security domain. The message MG may contain an identifier of the targeted entity, the command AC1 ciphered with a dedicated security mechanism. Advantageously, the message MG may contain an URL of the server SV in order to allow the secure element to generate a response message which must be forwarded to the server SV by the server PR. Thus a protocol with a minimum metadata overhead may be used between the secure element SC5 and the server PR. The protocol may use frames reduced to their simplest form. For example, the protocol may use frames comprising the identifier of the targeted entity followed by one or several ciphered commands. Alternatively, the frame may be based on the Tag-Length-Value scheme.

In the example of Figure 5B, there is no need of a message of the push type. The server PR directly and immediately sends the command AC1 to the secure element SC5 when the event EV occurs. Moreover, this new applicative protocol may be designed so as to have very light metadata and drastically reduce the overload.

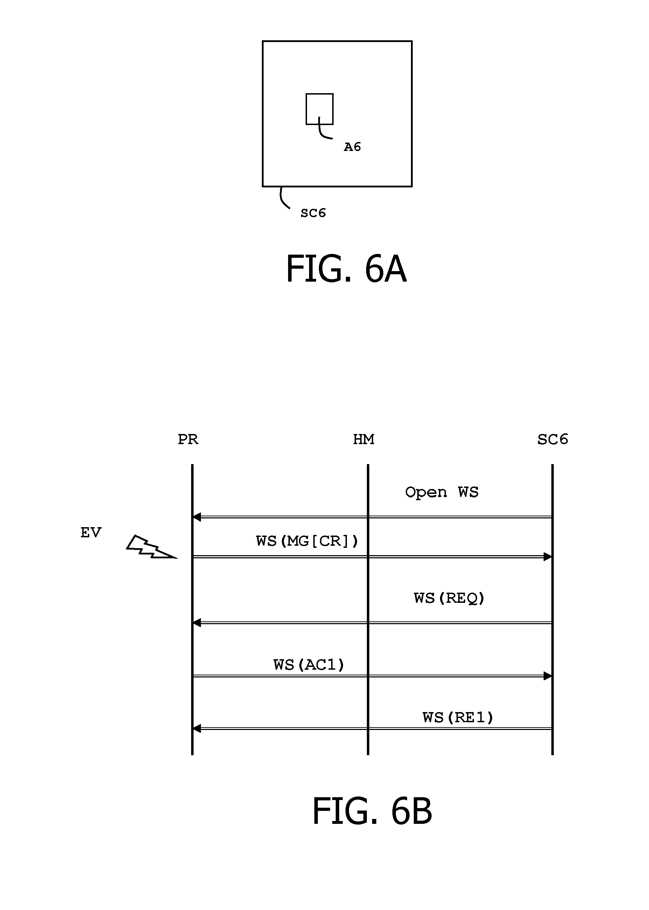

**Figure 6A** shows the architecture of a secure element SC6 according to one embodiment of the invention. The architecture of the secure element SC6 is similar to architecture of the secure element SC of Figure 1. In addition, the secure element SC6 comprises a checking means A6. Preferably, this checking means A6 is stored in the non volatile memory MEM.

**Figure 6B** shows an example of message exchanges between a server PR and a secure element SC6 of Figure 6A wherein the server PR sends a broadcast message.

The first step is similar to that described for Figure 1. At a second step, the server PR sends a message MG to the secure element SC6 thanks to the secure channel WS. An event EV triggers the sending of the message MG. The message MG is a broadcast message. In others words, the message MG is sent to a plurality of secure elements which are assumed to be connected to the server PR. The message MG contains at least one criterion CR which allows identifying a set of secure elements which are targeted by the message MG. For instance, the criterion may be the date of the building of the secure element, the version number of an application already installed on the secure element or the presence/absence of a specific application in the secure element. The secure element SC6 checks if it complies with the criterion CR. In case of successful checking, the secure element SC6 sends a request REQ to the server PR. The secure element SC6 may send the request through either the existing secure channel WS or by opening a new secure channel CH2. In the example of Figure 6B, the secure element SC6 sends the request REQ thanks to the secure channel WS. Then the server PR sends a command AC1 to the secure element SC6 through the secure channel WS.

For example, the command AC1 may be an APDU compliant with ISO7816 standard. For instance, the command AC1 may be a ReadRecord command coded as <0x00 B2030400> where the value stored in the record number #03 is to be sent outside the secure element.

Then, the secure element SC6 sends a response RE1 to the server PR through the secure channel WS. The response RE1 reflects the result of the execution of the command AC1.

Advantageously, the message MG may comprise several criteria which correspond to alternative or cumulative conditions.

Advantageously, the secure element may comprise an historical log allowing the secure element to check if the received message MG has already been treated.

The above-described means A1 to A6 may be implemented as either software or hardware components.

Although the secure elements of the Figure 1, 3A, 4A, 5A and 6A comprise a limited number of means, it must be understood that a secure element according to the invention may contain any combination of the means A1 to A6. For instance, a secure element according to the invention may comprise only the means A1 or only the combination A1, A5 and A6.

In the examples of Figures 3B, 4B, 5B and 6B, the event EV which triggers the sending of the message MG may be a message received by the server PR wherein the received message requires an urgent update of data in a secure element. For instance, an urgent upgrade may be needed for security reasons or applicative reasons.

The event EV may also be the establishment of the secure channel WS. The server PR may automatically send the message MG as soon as the secure channel WS is established. Alternatively, the server PR may check if there is a pending message intended to be sent to the secure element and send the message MG if necessary as soon as the secure channel WS is established..

It should be understood from the previous examples that the message MG may comprise a script instead of a single command. It should be understood that the set command/response AC1/RE1 may be followed by further sets command/response using the same channel.

The invention allows establishing a secured tunneling between the server PR and the secure element. Assuming that both the server PR and the secure element are trusted elements, the invention allows sending commands between these two elements even if the intermediary host machine HM is not a trusted element.

An advantage of the invention is to allow an immediate sending of message from a server to a secure element without waiting for a further polling session from the secure element.

In the case of UICC or equivalent token, an advantage of the invention is to allow immediate sending of message from a server to a secure element even if either the secure element or the server does not support the full Short Message Service (SMS) mechanism.

Although secure elements have been described as being hardware device, they may also be implemented as pure software component.

The present invention applies to both hardware and software secure elements.

The invention is compliant with existing polling mechanisms. For example, a usual polling mechanism may be used for long term upgrading of secure elements deployed on the field while the invention may be used for immediate upgrading. Thus a secure element may implement both the invention and a usual polling mechanism.

When using the WebSocket channel, an advantage of the invention is to be compliant with existing frameworks already deployed. In particular, the invention complies with existing firewall and network configurations as it uses the standard HTTP and HTTPs ports, and as the WebSocket handshake is performed using a standard HTTP GET request.

In prior art solutions, a temporary channel is established between a server and a secure element of UICC type. The use of a temporary channel is due to the fact that the number of secure elements that a server accesses generally exceeds the capabilities of the server. In other words, the server cannot simultaneously manage as many secure elements.

Even if the secure channel WS remains open during a long time, it should be noted that the invention does not generate any additional memory stress into the secure element. There is no memory writing required for keeping the secure channel WS opened. Only the microprocessor of the secure element is triggered each time a heartbeat is emitted for keeping the secure channel WS alive.

Advantageously, the secure element may be set in standby mode and may switch in active mode when a command is received through the secure channel WS.

## Claims

1. A **method** of sending a message (MG) from a server (SV) to a secure element (SC) having limited resources, said secure element (SC) being connected to a host machine (HM),
**characterized in that** said method comprises the steps of:
a) establishing a permanent and bidirectional secure channel (WS) between the server (PR) and the secure element (SC),
b) sending the message (MG) from the server (PR) to the secure element (SC) through the permanent and bidirectional secure channel (WS) and via the host machine (HM).

2. A method according to claim 1, wherein said permanent and bidirectional secure channel (WS) is established over a single TCP socket and complies with WebSocket as described in draft standard proposal "The WebSocket protocol -draft-ietf-hybi-thewebsocketprotocol-09".

3. A method according to one of claims 1 to 2, wherein the message (MG) is a push message comprising a data having the format of a SMS payload as defined by ETSI 102 225 standard, wherein the secure element (SC) initiates the opening of a second channel (CH2) in response to the receipt of the message (MG) and wherein the secure element (SC) sends a request (REQ) to the server (PR) through the second channel (CH2).

4. A method according to one of claims 1 to 2, wherein the message (MG) is a push message comprising a data having the format of a SMS payload as defined by ETSI 102 225 standard and wherein the secure element (SC) sends a request (REQ) to the server (PR) through the permanent and bidirectional secure channel (WS) in response to the receipt of the message (MG).

5. A method according to one of claims 1 to 2, wherein the secure element (SC) is intended to comprise an entity (AP, FS), wherein the message (MG) is a push message comprising a command (AC1) targeting the entity (AP, FS) and wherein the secure element (SC) sends a response (RE1) to the command (AC1) to the server (PR) through the permanent and bidirectional secure channel (WS).

6. A method according to one of claims 1 to 2, wherein the message (MG) is a broadcast message comprising a criterion (CR) and wherein the secure element (SC) checks the criterion (CR) and sends a request (REQ) to the server (PR) in case of successful checking.

7. A **secure element** (SC) intended to receive a message (MG) from a server (PR) via a connected host machine (HM), said secure element (SC) having limited resources,
**characterized in that** said secure element (SC) comprises starting means (A1) adapted to initiate the establishment of a permanent and bidirectional secure channel (WS) between the server (PR) and the secure element (SC).

8. A secure element (SC) according to claim 7, wherein said permanent and bidirectional secure channel (WS) is established over a single TCP socket and complies with WebSocket requirements as described in draft standard proposal "The WebSocket protocol -draft-ietf-hybi-thewebsocketprotocol-09".

9. A secure element (SC) according to one of claims 7 to 8, wherein the message (MG) is a push message comprising a data having the format of a SMS payload as defined by ETSI 102 225 standard, wherein the secure element (SC) comprises an opening means (A2) adapted to open a second channel (CH2) in response to the receipt of the message (MG) and wherein the secure element (SC) comprises a requesting means (A3) adapted to send a request (REQ) to the server (PR) through the second channel (CH2).

10. A secure element (SC) according to one of claims 7 to 8, wherein the message (MG) is a push message comprising a data having the format of a SMS payload as defined by ETSI 102 225 standard and wherein the secure element (SC) comprises a caller means (A4) adapted to send a request (REQ) to the server (PR) through the permanent and bidirectional secure channel (WS) in response to the receipt of the message (MG).

11. A secure element (SC) according to one of claims 7 to 8, wherein the secure element (SC) comprises an entity (AP, FS), wherein the message (MG) is a push message comprising a command (AC1) targeting the entity (AP, FS) and wherein the secure element (SC) comprises an answering means (A5) adapted to send a response (RE1) to the command (AC1) to the server (PR) through the permanent and bidirectional secure channel (WS).

12. A secure element (SC) according to one of claims 7 to 8, wherein the message (MG) is a broadcast message comprising a criterion (CR) and wherein the secure element (SC) comprises a checking means (A6) adapted to check the criterion (CR) and to send a request to the server (PR) in case of successful checking.

13. A **system** (SY) comprising a first and a second servers (PR, SV) and a secure element (SC),
**characterized in that** the secure element (SC) is according to claim 7, **in that** said second server (SV) comprises a generator means (M1) adapted to generate a command (AC1) intended to be sent to the secure element (SC) and **in that** said first server (PR) comprises a communication means (M2) adapted to send a message comprising said command (AC1) to the secure element (SC) through a WebSocket channel as described in draft standard proposal "The WebSocket protocol -draft-ietf-hybi-thewebsocketprotocol-09".
